(19) Europäisches Patentamt

European Patent Office

Office européen des brevets

(11) **EP 4 332 059 A1**

(12) **EUROPEAN PATENT APPLICATION**
published in accordance with Art. 153(4) EPC

(43) Date of publication:
**06.03.2024 Bulletin 2024/10**

(21) Application number: **22795348.6**

(22) Date of filing: **17.03.2022**

(51) International Patent Classification (IPC):
**C01B 25/37** (2006.01)     **H01M 4/58** (2010.01)
**H01B 1/08** (2006.01)     **C04B 35/495** (2006.01)
**H01M 10/0562** (2010.01)

(52) Cooperative Patent Classification (CPC):
**C01B 25/37; C04B 35/495; H01B 1/08; H01M 4/58;
H01M 10/0562;** Y02E 60/10

(86) International application number:
**PCT/JP2022/012228**

(87) International publication number:
**WO 2022/230426 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.04.2021 JP 2021076234**

(71) Applicant: **Resonac Corporation**
**Tokyo 105-8518 (JP)**

(72) Inventors:
• **LEE Kunchan**
**Tokyo 105-8518 (JP)**
• **SEI Ryosuke**
**Tokyo 105-8518 (JP)**

(74) Representative: **Strehl Schübel-Hopf & Partner
Maximilianstrasse 54
80538 München (DE)**

(54) **LITHIUM ION CONDUCTING OXIDE AND ALL SOLID BATTERY**

(57)     One embodiment of the present invention relates to a lithium ion-conductive oxide or an all-solid-state battery, wherein the lithium ion-conductive oxide has a crystal structure based on $LiTa_2PO_8$, and has at least lithium, tantalum, boron, phosphorus, oxygen, and fluorine as constituent elements, wherein a boron content represented by the following formula (1) is 4.0 to 15.0%, and a fluorine content represented by the following formula (2) is 0.5 to 2.0%.

```
The number of B atoms/(the number of B atoms + the

number of P atoms) × 100 ...(1)

The number of F atoms/(the number of O atoms + the

number of F atoms) × 100 ...(2)
```

EP 4 332 059 A1

**Description**

Technical Field

One embodiment of the present invention relates to a lithium ion-conductive oxide or an all-solid-state battery.

Background Art

In recent years, there has been a demand for development of high output and high capacity batteries as power sources for notebook computers, tablet terminals, cellphones, smartphones or electric vehicles (EV), for example. Among these, an all-solid-state battery employing a solid electrolyte instead of a liquid electrolyte such as an organic solvent has attracted attention as a battery having excellent charge/discharge efficiency, charging speed, safety, and productivity.

As the solid electrolyte, an inorganic solid electrolyte has attracted attention, and as the inorganic solid electrolyte, oxide and sulfide solid electrolytes are mainly known.

The sulfide-based solid electrolytes have some advantages, such as the ability to fabricate batteries by cold pressing, for example, however, they are unstable to humidity and may generate a harmful hydrogen sulfide gas, whereby oxide-based solid electrolytes (for example, Patent Literatures 1 to 3) have been developed from the viewpoint of, for example, safety.

Citation List

Patent Literature

Patent Literature 1: JP2013-157090A
Patent Literature 2: WO2020/036290
Patent Literature 3: JP2020-194773A

Summary of Invention

Technical Problem

The oxide-based solid electrolyte (lithium ion-conductive oxide) has extremely high grain boundary resistance, and in order to obtain enough ion conductivity to be used in all-solid-state batteries, lithium ion-conductive oxide powder is required to be subjected not only to pressure-forming, but also to sintering to increase their relative densities (percentage of an actual density to a theoretical density).

However, conventional lithium ion-conductive oxides, such as those described in the aforementioned Patent Literatures 1 to 3, could not easily provide oxides with a high relative density, and have room for improvement in terms of ion conductivity.

One embodiment of the present invention provides a lithium ion-conductive oxide having a high relative density and sufficient ion conductivity.

Solution to Problem

The present inventors have found as a result of diligent investigations that the above problem can be solved according to the following configuration examples, and thus have completed the present invention.

The configuration examples of the present invention are as follows.

[1] A lithium ion-conductive oxide, having a crystal structure based on $LiTa_2PO_8$, and

comprising at least lithium, tantalum, boron, phosphorus, oxygen, and fluorine as constituent elements,
wherein a boron content represented by the following formula (1) is 4.0 to 15.0%, and
a fluorine content represented by the following formula (2) is 0.5 to 2.0%:

$$\text{The number of B atoms} / (\text{the number of B atoms} + \text{the number of P atoms}) \times 100 \quad ...(1)$$

$$\text{The number of F atoms} / (\text{the number of O atoms} + \text{the number of F atoms}) \times 100 \quad ...(2)$$

[2] The lithium ion-conductive oxide according to [1], further comprising niobium as a constituent element, wherein a niobium content represented by the following formula (3) is more than 0% and 20.0% or less:

$$\text{The number of Nb atoms} / (\text{the number of Nb atoms} + \text{the number of Ta atoms}) \times 100 \quad ...(3)$$

[3] The lithium ion-conductive oxide according to [1] or [2], having a relative density of 70% or more that is a percentage of a ratio of a measured density calculated from a mass and volume of a lithium ion-conductive oxide to a theoretical density of the oxide.

[4] The lithium ion-conductive oxide according to any one of [1] to [3], wherein a content rate of the crystal structure based on $LiTa_2PO_8$ is 85% or more.

[5] The lithium ion-conductive oxide according to any one of [1] to [4], wherein a lithium content represented by the following formula (4) is more than 0.9 and 1.5 or less:

$$\text{The number of Li atoms} / \{ (\text{the number of Nb atoms} + \text{the number of Ta atoms}) / 2 \} \quad ...(4)$$

[6] An all-solid-state battery, comprising:

a positive electrode having a positive electrode active material;
a negative electrode having a negative electrode active material; and
a solid electrolyte layer between the positive electrode and the negative electrode, wherein
the solid electrolyte layer comprises the lithium ion-conductive oxide according to any one of [1] to [5].

[7] The all-solid-state battery according to [6], wherein the positive electrode active material comprises one or more compounds selected from the group consisting of $LiM3PO_4$ wherein M3 is one or more elements selected from the group consisting of Mn, Co, Ni, Fe, Al, Ti and V, or two elements of V and O, $LiM5VO_4$ wherein M5 is one or more elements selected from the group consisting of Fe, Mn, Co, Ni, Al and Ti, $Li_2M6P_2O_7$ wherein M6 is one or more elements selected from the group consisting of Fe, Mn, Co, Ni, Al, Ti and V, or two elements of V and O, $LiVP_2O_7$, $Li_{x7}V_{y7}M7_{z7}$ wherein $2 \leq x7 \leq 4$, $1 \leq y7 \leq 3$, $0 \leq z7 \leq 1$, $1 \leq y7+z7 \leq 3$, and M7 is one or more elements selected from the group consisting of Ti, Ge, Al, Ga and Zr, $Li_{1+x8}Al_{x8}M8_{2-x8}(PO_4)_3$ wherein $0 \leq x8 \leq 0.8$, and M8 is one or more elements selected from the group consisting of Ti and Ge, $LiNi_{1/3}Co_{1/3}Mn_{1/3}O_2$, $LiCoO_2$, $LiNiO_2$, $LiMn_2O_4$, $Li_2CoP_2O_7$, $Li_3V_2(PO_4)_3$, $Li_3Fe_2(PO_4)_3$, $LiNi_{0.5}Mn_{1.5}O_4$ and $Li_4Ti_5O_{12}$.

[8] The all-solid-state battery according to [6] or [7], wherein the negative electrode active material comprises one or more compounds selected from the group consisting of $LiM3PO_4$ wherein M3 is one or more elements selected from the group consisting of Mn, Co, Ni, Fe, Al, Ti and V, or two elements of V and O, $LiM5VO_4$ wherein M5 is one or more elements selected from the group consisting of Fe, Mn, Co, Ni, Al and Ti, $Li_2M6P_2O_7$ wherein M6 is one or more elements selected from the group consisting of Fe, Mn, Co, Ni, Al, Ti and V, or two elements of V and O, $LiVP_2O_7$, $Li_{x7}V_{y7}M7_{z7}$ wherein $2 \leq x7 \leq 4$, $1 \leq y7 \leq 3$, $0 \leq z7 \leq 1$, $1 \leq y7+z7 \leq 3$, and M7 is one or more elements selected from the group consisting of Ti, Ge, Al, Ga and Zr, $Li_{1+x8}Al_{x8}M8_{2-x8}(PO_4)_3$ wherein $0 \leq x8 \leq 0.8$, and M8 is one or more elements selected from the group consisting of Ti and Ge, $(Li_{3-a9x9+(5-b9)y9}M9_{x9})(V_{1-y9}M10_{y9})O_4$ wherein M9 is one or more elements selected from the group consisting of Mg, Al, Ga and Zn, M10 is one or more elements selected from the group consisting of Zn, Al, Ga, Si, Ge, P and Ti, $0 \leq x9 \leq 1.0$, $0 \leq y9 \leq 0.6$, a9 is an average valence of M9, and b9 is an average valence of M10, $LiNb_2O_7$, $Li_4Ti_5O_{12}$, $Li_4Ti_5PO_{12}$, $TiO_2$, LiSi, and graphite.

[9] The all-solid-state battery according to any one of [6] to [8], wherein the positive electrode and the negative electrode comprise the lithium ion-conductive oxide according to any one of [1] to [5].

Advantageous Effect of Invention

According to one embodiment of the present invention, a lithium ion-conductive oxide with a high relative density and sufficient ion conductivity, can be provided.

Brief Description of Drawing

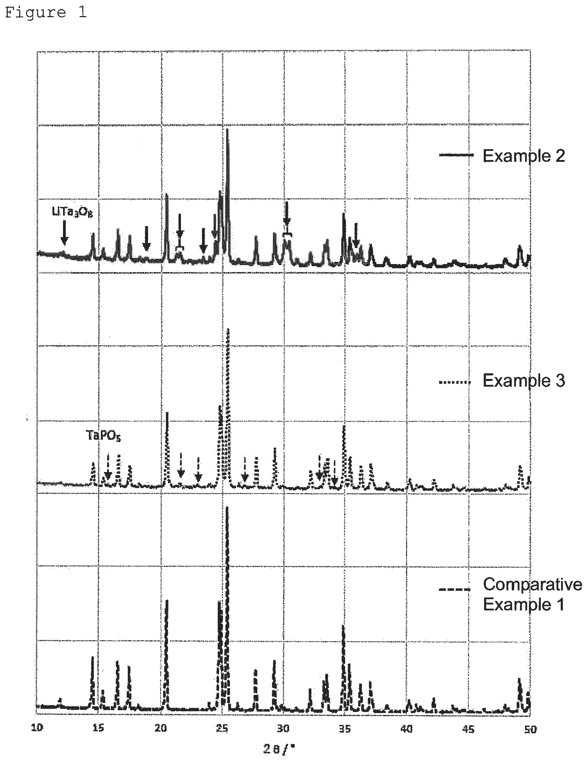

[Figure 1] Figure 1 shows XRD patterns of lithium ion-conductive oxides obtained in Examples 2 and 3 and Comparative Example 1.

Description of Embodiment

<<Lithium ion-conductive oxide>>

The lithium ion-conductive oxide (hereinafter referred to as the "present oxide") according to one embodiment of the present invention has a crystal structure based on $LiTa_2PO_8$ (hereinafter also referred to as "LTPO structure"), and

has at least lithium, tantalum, boron, phosphorus, oxygen, and fluorine as constituent elements,
wherein a boron content represented by the following formula (1) is 4.0 to 15.0%, and
a fluorine content represented by the following formula (2) is 0.5 to 2.0%.

$$\text{Boron content} = \text{the number of B atoms}/(\text{the number of B atoms} + \text{the number of P atoms}) \times 100 \quad ...(1)$$

$$\text{Fluorine content} = \text{the number of F atoms}/(\text{the number of O atoms} + \text{the number of F atoms}) \times 100 \quad ...(2)$$

The fact that the present oxide has the above LTPO structure can be determined by analyzing an X-ray diffraction (XRD) pattern, specifically, the XRD pattern measured by the method described in the following Examples.
The constituent elements of the present oxide are not particularly limited as long as the constituent elements include lithium, tantalum, boron, phosphorus, oxygen, and fluorine; however, for example, in view of easily obtaining a lithium ion-conductive oxide with a high relative density, the constituent elements may preferably further include niobium, and further, one or more other element M selected from the group consisting of Zr, Ga, Sn, Hf, Bi, W, Mo, Si, Al, and Ge.
The boron content of the present oxide represented by the formula (1) above is 4.0% or more, preferably 9.0% or more, and 15.0% or less and preferably 10.0% or less.
Within the above range of boron content, an oxide with a higher relative density is obtained.
The fluorine content of the present oxide represented by the formula (2) above is 0.5% or more, preferably 0.6% or more, and 2.0% or less and preferably 1.9% or less.
Within the above range of the fluorine content, an oxide with higher total ion conductivity is obtained.
When the present oxide further includes a niobium element, the niobium content represented by the following formula (3) is preferably more than 0% and 20.0% or less. The lower limit of the niobium content is more preferably 5%. The upper limit of the niobium content is also more preferably 15.0%, further preferably 12.0%, and particularly preferably 10.0%.

$$\text{Niobium content} = \text{the number of Nb atoms}/(\text{the number of Nb atoms} + \text{the number of Ta atoms}) \times 100 \quad ...(3)$$

Within the above range of the niobium content, an oxide with relatively high total ion conductivity and a higher relative density is obtained.

The lower limit of the lithium content of the present oxide represented by the following formula (4) is preferably more than 0.9, more preferably 1.0, and further preferably 1.1. The upper limit of the lithium content is preferably 1.5 and more preferably 1.2. The "(the number of Nb atoms + the number of Ta atoms)" in the following formula (4) is "the number of Ta atoms" when the present oxide does not have niobium as a constituent element.

```
Lithium content = the number of Li atoms/{(the number of

Nb atoms + the number of Ta atoms)/2} ...(4)
```

Within the above range of the lithium content, an oxide having relatively high total ion conductivity and a higher relative density is obtained.

It is noted that the content of each element in the present oxide can be measured by an absolute intensity quantification method of Auger electron spectroscopy (AES: Auger Electron Spectroscopy) using a standard powder sample including Mn, Co, and Ni at the ratio of 1:1:1 as a lithium-containing transition metal oxide such as $LiCoO_2$. In addition thereto, the content thereof can be determined by a conventionally known quantitative analysis. For example, the content of each element in the present oxide can be determined using a high frequency inductively coupled plasma (ICP) emission spectrometer after adding an acid to the present oxide for thermal decomposition and then adjusting the volume of the thermal decomposition product.

A composition of the present oxide can be simply adjusted by mixing raw materials including each constituent element so that a ratio of the content of each constituent element is in a desired range. Specifically, as shown in Examples, the composition can be adjusted by weighing and using raw materials including each constituent element so as to satisfy the predetermined stoichiometric ratios.

A relative density of the present oxide is preferably 70% or higher, more preferably 80% or higher, further preferably 90% or higher, and particularly preferably 95% or higher.

The relative density is a percentage obtained by dividing the measured density calculated from the mass and volume of the present oxide by a theoretical density of the present oxide (measured density/theoretical density $\times$ 100), and can be specifically measured by the method described in Examples below.

It is noted that the theoretical density of the present oxide is specifically calculated by weighted averaging using a theoretical density of a crystal structure constituting a lithium ion-conductive oxide and the content of the crystal structure. For example, when the present oxide has a crystal structure 1 with h% content and a crystal structure 2 with k% content, the theoretical density can be calculated by (theoretical density of crystal structure 1 $\times$ h + theoretical density of crystal structure 2 $\times$ k)/100. More specifically, the theoretical density can be represented by the following formula (5):

```
{Sum of (theoretical density of an observed crystal ×

crystallinity (%))}/100 ...(5)
```

The content rate (crystallinity) of each crystal structure can be determined by Rietveld analysis.

Examples of a crystal structure other than the LTPO structure included in the present oxide include $LiTa_3O_8$, $Ta_2O_5$, and TaPOs, for example. These crystal structures can be confirmed by their XRD patterns.

The present oxide preferably includes the LTPO structure and at least one crystal selected from $LiTa_3O_8$, $Ta_2O_5$, and TaPOs, and more preferably includes the LTPO structure and one or two crystals selected from $LiTa_3O_8$, $Ta_2O_5$, and $TaPO_5$. In the latter case, the content rate of one or two crystals selected from $LiTa_3O_8$, $Ta_2O_5$, and $TaPO_5$ is 0%.

A content rate of LTPO structure in the present oxide [crystallinity of LTPO structure] (= crystal amount of LTPO $\times$ 100/total crystal amount of all crystals identified) is preferably 85% or more, more preferably 89% or more, further preferably 90% or more, and particularly preferably more than 95%. The upper limit of the crystallinity of LTPO structure is not particularly limited, but preferably less than 100% and more preferably 99% or less.

Within the above range of the crystallinity of LTPO structure in the present oxide, the present oxide tends to have high total ion conductivity.

The crystallinity of LTPO structure in the present oxide can be calculated by subjecting, for example, an XRD pattern of the present oxide to Rietvelt analysis, using a known analysis software RIETAN-FP (available on creator; Fujio Izumi's website "RIETAN-FP / VENUS system distribution file" (http://fujioizumi.verse.jp/download/download.html).

In the case of the present oxide including a LiTasOs crystal, the upper limit of the content rate of $LiTa_3O_8$ crystal in the present oxide ($LiTa_3O_8$ crystallinity) is preferably 12.0% or less, and the lower limit thereof is preferably more than 1.2%, more preferably 1.5% or more, and further preferably 3.0% or more.

In the case of the present oxide including a $Ta_2O_5$ crystal, the lower limit of the content rate of $Ta_2O_5$ crystal in the present oxide ($Ta_2O_5$ crystallinity) is preferably more than 0%, and the upper limit thereof is preferably 2.5% or less, more preferably 1.5% or less, and further preferably 1.0% or less.

In the case of the present oxide including a TaPOs crystal, the upper limit of the content rate of $TaPO_5$ crystal in the present oxide (TaPOs crystallinity) is preferably 3.5% or less and more preferably 3.0% or less and the lower limit thereof is more than 0%.

When at least one of the above ranges of the LiTasOs crystallinity, the $Ta_2O_5$ crystallinity, and the TaPOs crystallinity is satisfied, lithium ion-conductive oxides with a high relative density and/or high total ion conductivity tend to be easily obtained.

It is noted that in the case of the present oxide including at least one crystal selected from $LiTa_3O_6$, $Ta_2O_5$, and TaPOs, the remainder of a total of the crystallinity of these crystals (100 - total of crystallinity of these crystals) is preferably the content rate of LTPO structure.

The crystallinity of crystal structures such as $LiTa_3O_8$, $Ta_2O_5$ and TaPOs can be calculated respectively in the same manner as the method for calculating the content rate of the LTPO structure described above.

An amorphous portion is basically not included in the present oxide, but the amorphous portion may be included to the extent that it does not affect conductivity.

Total ion conductivity of the present oxide is preferably $2.00 \times 10^{-4}$ S·cm$^{-1}$ or higher, more preferably $3.00 \times 10^{-4}$ S·cm$^{-1}$ or higher, and further preferably $4.00 \times 10^{-4}$ S·cm$^{-1}$ or higher.

Within the above range of the total ion conductivity, the present oxide can be said to have sufficient ion conductivity.

Specifically, the total ion conductivity can be measured by the method described in the following Examples.

<Production method of the present oxide>

The present oxide can be produced by calcining (or sintering) raw materials mixed so that the content of each constituent element is within the above range.

Specific examples of the method include a method (1) including pulverizing and mixing raw materials in a ball mill or bead mill, for example, followed by calcining the mixture, and a method (2) including pulverizing and mixing raw materials in a ball mill or bead mill, for example, compressing and processing the mixture into a predetermined shape, and then sintering the resultant.

A method (3) including pulverizing the calcinated material obtained by the method (1) above (which may be further mixed with various additives, if necessary), and then being formed by compression processing, for example, such as press forming, and then sintering the formed body, is also included.

As the raw materials described above, for example, a compound including a lithium atom, a compound including a tantalum atom, a compound including a boron atom, a compound including a phosphorus atom, and a compound including a fluorine atom, are used, and in the case of the present oxide having niobium as a constituent element, a compound including a niobium atom is further used, and in the case of the present oxide having the other element M, a compound including an M atom is further used.

Examples of the compound including a lithium atom include lithium carbonate ($Li_2CO_3$), lithium oxide ($Li_2O$), lithium hydroxide (LiOH), lithium acetate ($LiCH_3COO$), and hydrates thereof. Among these, lithium carbonate, lithium hydroxide, and lithium acetate are preferable in that they are easily decomposed and reacted.

These compounds including a lithium atom may be used singly, or two or more thereof.

Examples of the compound including a tantalum atom include tantalum pentoxide ($Ta_2O_5$) and tantalum nitrate ($Ta(NO_3)_5$). Among these, tantalum pentoxide is preferable from the viewpoint of cost.

These compounds including a tantalum atom may be used singly, or two or more thereof.

Examples of the compound including a boron atom include $LiBO_2$, $LiB_3O_5$, $Li_2B_4O_7$, $Li_3B_{11}O_{18}$, $Li_3BO_3$, $Li_3B_7O_{12}$, $Li_4B_2O_5$, $Li_6B_4O_9$, $Li_{3-x5}B_{1-x5}C_{x5}O_3$ (0 < x5 <1) , $Li_{4-x6}B_{2-x6}C_{x6}O_5$ (0 < x6 <2), $Li_{2.4}Al_{0.2}BO_3$, $Li_{2.7}Al_{0.1}BO_3$, $B_2O_3$, and $H_3BO_3$.

These compounds including a boron atom may be used singly, or two or more thereof.

As the compound including a phosphorus atom, a phosphate is preferable, and examples of the phosphate include diammonium hydrogen phosphate (($NH_4)_2HPO_4$) and monoammonium dihydrogen phosphate ($NH_4H_2PO_4$) in that these are easily decomposed and reacted.

These compounds including a phosphorus atom may be used singly, or two or more thereof.

Examples of the compound including a fluorine atom include, for example, LiF, $TaF_5$, $NbF_5$, $HBF_4$, and $H_2SiF_6$. LiF is preferred from the viewpoint of facilitation of handleability and adjustability of a composition.

These compounds including a fluorine atom may be used singly, or two or more thereof.

Example of the compound including a niobium atom include, for example, $Nb_2O_5$, $LiNbO_3$, $LiNb_3O_8$, and NbPOs.

These compounds including a niobium atom may be used singly, or two or more thereof.

Examples of the compounds including an M atom include, for example, oxides and nitrates of element M.

These compounds including an M atom may be used singly, or two or more thereof.

A calcination temperature upon the calcination in the method (1) above is preferably 500°C or higher, more preferably 700°C or higher, and preferably 1200°C or lower, more preferably 1000°C or lower, and a calcination time is, for example, 1 to 16 hours.

By such calcination, impurities, for example, which may be included in the raw materials are volatilized and removed, and a desired oxide can be obtained.

Pressure upon the compression processing in the methods (2) and (3) above is not particularly limited, but preferably 50 MPa or more, more preferably 100 MPa or more, and preferably 500 MPa or less and more preferably 400 MPa or less.

The above predetermined shape is not particularly limited, but is preferably a shape depending on applications of the present oxide and even a solid electrolyte.

A sintering temperature upon sintering in the methods (2) and (3) above is preferably 600 to 1200°C, and a sintering time is for example 1 to 96 hours.

The calcination and sintering may be performed under an air atmosphere, or in an atmosphere of a nitrogen gas and/or an argon gas with an oxygen gas content adjusted in a range of 0 to 20% by volume, or in a reducing gas atmosphere such as a nitrogen-hydrogen mixed gas including a reducing gas such as a hydrogen gas. As the reducing gas other than a hydrogen gas, for example, an ammonia gas, or a carbon monoxide gas may be used.

«All-solid-state battery»

The all-solid-state battery according to one embodiment of the present invention (hereinafter also referred to as the "present battery") includes a positive electrode having a positive electrode active material, a negative electrode having a negative electrode active material, and a solid electrolyte layer between the positive electrode and the negative electrode, wherein the solid electrolyte layer includes the present oxide.

The present battery may be a primary battery or a secondary battery, and is preferably a secondary battery and more preferably a lithium ion secondary battery, from the viewpoint of, for example, exerting the advantageous effects of the present invention more.

The structure of the present battery is not particularly limited as long as the present battery include a positive electrode, a negative electrode, and a solid electrolyte layer between the positive electrode and the negative electrode, and may be a so-called thin film type, laminated type, or bulk type.

<Solid electrolyte layer>

The solid electrolyte layer is not particularly limited as long as the solid electrolyte layer includes the present oxide, and may include additives conventionally known to be used in solid electrolyte layers for all-solid-state batteries, if necessary, but the solid electrolyte layer preferably consists of the present oxide.

A thickness of the solid electrolyte layer may be appropriately selected according to a structure of a battery to be formed (thin-film type, for example), and is preferably 50 nm or thicker, more preferably 100 nm or thicker, and preferably 1,000 um or thinner and more preferably 100 $\mu$m or thinner.

<Positive electrode>

The positive electrode is not particularly limited as long as the positive electrode has a positive electrode active material, and preferable examples thereof include a positive electrode having a positive electrode current collector and a positive electrode active material layer.

[Positive electrode active material layer]

The positive electrode active material layer is not particularly limited as long as the positive electrode active material layer includes a positive electrode active material, and the positive electrode active material layer preferably includes a positive electrode active material and a solid electrolyte and may further include an additive such as an electrically conductive aid or a sintering aid.

A thickness of the positive electrode active material layer may be appropriately selected according to a structure of a battery to be formed (thin-film type, for example), and is preferably 10 $\mu$m or thicker, more preferably 30 $\mu$m or thicker, further preferably 50 $\mu$m or thicker, and preferably 200 $\mu$m or thinner, more preferably 150 um or thinner, and more preferably 100 um or thinner.

• Positive electrode active material

Examples of the positive electrode active material include LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, metal lithium phosphate, a transition metal oxide, titanium sulfide, graphite, hard carbon, a transition metal-containing lithium nitride, silicon oxide, lithium silicate, lithium metal, a lithium alloy, a Li-containing solid solution, and a lithium-storing intermetallic compound.

Among these, LiNiCoMn oxide, LiNiCo oxide, and LiCo oxide are preferable, and LiNiCoMn oxide is more preferable, from the viewpoint of, for example, having a good affinity with a solid electrolyte, having an excellent balance of macroscopic electrical conductivity, microscopic electrical conductivity, and ion conductivity, having a high average potential, and being able to increase the energy density or battery capacity in the balance between specific capacity and stability.

In addition, the surface of the positive electrode active material may be coated with, for example, an ion conductive oxide such as lithium niobate, lithium phosphate, or lithium borate.

As the positive electrode active material used for the positive electrode active material layer, one may be used or two or more may be used.

Suitable examples of the above positive electrode active material also include $LiM3PO_4$ wherein M3 is one or more elements selected from the group consisting of Mn, Co, Ni, Fe, Al, Ti and V, or two elements of V and O, $LiM5VO_4$ wherein M5 is one or more elements selected from the group consisting of Fe, Mn, Co, Ni, Al and Ti, $Li_2M6P_2O_7$ wherein M6 is one or more elements selected from the group consisting of Fe, Mn, Co, Ni, Al, Ti and V, or two elements of V and O, $LiVP_2O_7$, $Li_{x7}V_{y7}M7_{z7}$ wherein $2 \leq x7 \leq 4$, $1 \leq y7 \leq 3$, $0 \leq z7 \leq 1$, $1 \leq y7+z7 \leq 3$, and M7 is one or more elements selected from the group consisting of Ti, Ge, Al, Ga and Zr, $Li_{1+x8}Al_{x8}M8_{2-x8}(PO_4)_3$ wherein $0 \leq x8 \leq 0.8$, and M8 is one or more elements selected from the group consisting of Ti and Ge, $LiNi_{1/3}Co_{1/3}Mn_{1/3}O_2$, $LiCoO_2$, $LiNiO_2$, $LiMn_2O_4$, $Li_2CoP_2O_7$, $Li_3V_2(PO_4)_3$, $Li_3Fe_2(PO_4)_3$, $LiNi_{0.5}Mn_{1.5}O_4$ and $Li_4Ti_5O_{12}$.

The positive electrode active material is preferably in the form of a particle. A 50% diameter in its volume-based particle size distribution is preferably 0.1 $\mu$m or larger, more preferably 0.3 $\mu$m or larger, further preferably 0.4 $\mu$m or larger, particularly preferably 0.5 $\mu$m or larger, and preferably 30 $\mu$m or smaller, more preferably 20 $\mu$m or smaller, further preferably 10 $\mu$m or smaller, and particularly preferably 3 um or smaller.

In addition, the ratio of the length of the major axis to the length of the minor axis (length of the major axis/length of the minor axis), that is, the aspect ratio, of the positive electrode active material is preferably less than 3 and more preferably less than 2.

The positive electrode active material may form a secondary particle. In such a case, the 50% diameter in a number-based particle size distribution of primary particles is preferably 0.1 $\mu$m or larger, more preferably 0.3 $\mu$m or larger, further preferably 0.4 $\mu$m or larger, particularly preferably 0.5 $\mu$m or larger, and preferably 20 um or smaller, more preferably 15 um or smaller, further preferably 10 $\mu$m or smaller, and particularly preferably 2 $\mu$m or smaller.

The content of positive electrode active material in the positive electrode active material layer is preferably 20% by mass or more, more preferably 30% by mass or more, and preferably 80% by mass or less, and more preferably 70% by mass or less.

When the content of the positive electrode active material is in the above range, the positive electrode active material functions favorably, and a battery having a high energy density tends to be able to be easily obtained.

• Solid electrolyte

A solid electrolyte that can be used for the positive electrode active material layer is not particularly limited, and conventionally known solid electrolytes can be used, but the present oxide is preferably used from the viewpoint of more demonstrating effects of the present invention, for example.

As the solid electrolyte used for the positive electrode active material layer, one may be used or two or more may be used.

• Additives

Suitable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, a compound including a boron atom, a compound including a niobium atom, and a compound including an M atom (examples of M: bismuth and silicon) are preferred.

As each additive used for the positive electrode active material layer, one may be used or two or more may be used.

• Positive electrode current collector

The positive electrode current collector is not particularly limited as long as the material thereof is one that conducts an electron without causing an electrochemical reaction. Examples of the material of the positive electrode current collector include a simple substance of a metal such as copper, aluminum, or iron, an alloy including any of these metals, and an electrically conductive metal oxide such as antimony-doped tin oxide (ATO) or tin-doped indium oxide (ITO).

As the positive electrode current collector, a current collector obtained by providing an electrically conductive adhesive layer on the surface of an electric conductor can also be used. Examples of the electrically conductive adhesive layer include a layer including, for example, a granular electrically conductive material, or a fibrous electrically conductive material.

<Negative electrode>

The negative electrode is not particularly limited as long as the negative electrode has a negative electrode active material, and preferable examples thereof include a negative electrode having a negative electrode current collector and a negative electrode active material layer.

[Negative electrode active material layer]

The negative electrode active material layer is not particularly limited as long as the negative electrode active material layer includes a negative electrode active material, and the negative electrode active material layer preferably includes a negative electrode active material and a solid electrolyte and may further include an additive such as an electrically conductive aid or a sintering aid.

A thickness of the negative electrode active material layer may be appropriately selected according to a structure of a battery to be formed (thin-film type, for example), but it is preferably 10 $\mu$m or thicker, more preferably 30 $\mu$m or thicker, further preferably 50 $\mu$m or thicker, and preferably 200 um or thinner, more preferably 150 $\mu$m or thinner, further preferably 100 $\mu$m or thinner.

• Negative electrode active material

Examples of the negative electrode active material include a lithium alloy, metal oxides, graphite, hard carbon, soft carbon, silicon, a silicon alloy, silicon oxide $SiO_n$ ($0<n\leq2$), a silicon/carbon composite material, a composite material including silicon in a pore of porous carbon, lithium titanate, and graphite coated with lithium titanate.

Among these, the silicon/carbon composite material and a composite material including a silicon domain in a pore of porous carbon are preferable because these have a high specific capacity and can increase the energy density and the battery capacity. A composite material including a silicon domain in a pore of porous carbon is more preferable, has excellent alleviation of volume expansion associated with lithium storage/release by silicon, and can maintain the balance of macroscopic electrical conductivity, microscopic electrical conductivity, and ion conductivity well. A composite material including a silicon domain in a pore of porous carbon in which the silicon domain is amorphous, the size of the silicon domain is 10 nm or less, and the pore derived from the porous carbon is present in the vicinity of the silicon domain is particularly preferable.

Suitable examples of the above negative electrode active material also include $LiM3PO_4$ wherein M3 is one or more elements selected from the group consisting of Mn, Co, Ni, Fe, Al, Ti and V, or two elements of V and O, $LiM5VO_4$ wherein M5 is one or more elements selected from the group consisting of Fe, Mn, Co, Ni, Al and Ti, $Li_2M6P_2O_7$ wherein M6 is one or more elements selected from the group consisting of Fe, Mn, Co, Ni, Al, Ti and V, or two elements of V and O, $LiVP_2O_7$, $Li_{x7}V_{y7}M7_{z7}$ wherein $2\leq x7\leq4$, $1\leq y7\leq3$, $0\leq z7\leq1$, $1\leq y7+z7\leq3$, and M7 is one or more elements selected from the group consisting of Ti, Ge, Al, Ga and Zr, $Li_{1+x8}Al_{x8}M8_{2-x8}(PO_4)_3$ wherein $0\leq x8\leq0.8$, and M8 is one or more elements selected from the group consisting of Ti and Ge, $(Li_{3-a9x9+(5-b9)y9}M9_{x9})(V_{1-y9}M10_{y9})O_4$ wherein M9 is one or more elements selected from the group consisting of Mg, Al, Ga and Zn, M10 is one or more elements selected from the group consisting of Zn, Al, Ga, Si, Ge, P and Ti, $0\leq x9\leq1.0$, $0\leq y9\leq0.6$, a9 is an average valence of M9, and b9 is an average valence of M10, $LiNb_2O_7$, $Li_4Ti_5O_{12}$, $Li_4Ti_5PO_{12}$, $TiO_2$, LiSi, and graphite.

The negative electrode active material is preferably in the form of a particle. The 50% diameter in the volume-based particle size distribution thereof, the aspect ratio, and the 50% diameter in the number-based particle size distribution of a primary particle when the negative electrode active material forms a secondary particle are preferably in the same ranges as for the positive electrode active material.

The content of the negative electrode active material in the negative electrode active material layer is preferably 20% by mass or more, more preferably 30% by mass or more, and preferably 80% by mass or less and more preferably 70% by mass or less.

When the content of the negative electrode active material is in the above range, the negative electrode active material functions favorably, and a battery having a high energy density tends to be able to be easily obtained, for example.

• Solid electrolyte

The solid electrolyte that can be used for the negative electrode active material layer is not particularly limited, and conventionally known solid electrolytes can be used, but the present oxide is preferably used from the viewpoint of demonstrating effects of the present invention more.

As the solid electrolyte used for the negative electrode active material layer, one may be used or two or more may be used.

• Additives

Suitable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, a compound including a boron atom, a compound including a niobium atom, and a compound including an M atom (examples of M: bismuth and silicon) are preferred.

As each additive used for the negative electrode active material layer, one may be used or two or more may be used.

• Negative electrode current collector

As the negative electrode current collector, the same current collector as for the positive electrode current collector can be used.

<Method for producing all-solid-state battery>

The all-solid-state battery can be formed, for example, by a known powder molding method. For example, the positive electrode current collector, a powder for the positive electrode active material layer, a powder for the solid electrolyte layer, a powder for the negative electrode active material layer, and the negative electrode current collector are stacked in this order, these are powder molded at the same time, and thereby formation of each layer of the positive electrode active material layer, the solid electrolyte layer, and the negative electrode active material layer, and connection between any adjacent two of the positive electrode current collector, the positive electrode active material layer, the solid electrolyte layer, the negative electrode active material layer, and the negative electrode current collector can be carried out at the same time.

Suitable examples of the conditions for this powder molding include the same conditions (pressure and temperature) as those for sintering in the production method of the above present oxide.

The positive electrode active material layer, the solid electrolyte layer, and the negative electrode active material layer may undergo the above powder molding, respectively, however, each layer is preferably pressed and sintered upon fabricating an all-solid-state battery using each of the layers obtained.

In addition, the all-solid-state battery can also be fabricated, for example, by the following method.

For example a solvent, and/or a resin are(is) appropriately mixed into a material for positive electrode active material layer formation, a material for solid electrolyte layer formation, and a material for negative electrode active material layer formation to prepare pastes for formation of the layers, respectively, and the pastes are applied onto base sheets, respectively, and dried to fabricate a green sheet for the positive electrode active material layer, a green sheet for the solid electrolyte layer, and a green sheet for the negative electrode active material layer. Next, the green sheet for the positive electrode active material layer, the green sheet for the solid electrolyte layer, and the green sheet for the negative electrode active material layer from each of which the base sheet is peeled off are sequentially laminated, thermocompression bonded at a predetermined pressure, and then enclosed in a container and pressurized by, for example, hot isostatic pressing, cold isostatic pressing, or isostatic pressing to fabricate a laminated structure.

Thereafter, this laminated structure was subjected to degreasing treatment at a predetermined temperature, if necessary, followed by sintering treatment to fabricate a laminated sintered body.

A sintering temperature in this sintering treatment is preferably the same as the sintering temperature in the above method of producing the present oxide.

Next, if necessary, an all-solid-state battery can also be fabricated by forming a positive electrode current collector and a negative electrode current collector on both principal surfaces of the laminated sintered body by, for example, a sputtering method, a vacuum vapor deposition method, or application or dipping of a metal paste.

Examples

One embodiment of the present invention will be specifically described below based on Examples. The present invention is not limited to these Examples.

[Example 1]

Lithium carbonate ($Li_2CO_3$) (purity 99.0% or higher, manufactured by Merck, Sigma-Aldrich Co. LLC.), tantalum pentoxide ($Ta_2O_5$) (purity 99.9% manufactured by FUJIFILM Wako Pure Chemicals Corporation), boric acid ($H_3BO_3$) (purity 99.5% or higher manufactured by FUJIFILM Wako Pure Chemicals Corporation), diammonium hydrogen phosphate (($NH_4$)$_2HPO_4$) (purity 98% or higher manufactured by Merck, Sigma-Aldrich Co. LLC.), and lithium fluoride (LiF) (Merck, Sigma-Aldrich Co. LLC.), were weighed so that the resulting lithium ion-conductive oxide satisfies the stoichiometric ratios (ratios of number of atoms) in Table 1. Specifically, lithium carbonate was weighed so that its lithium amount was 1.05 times the amount of lithium atoms in Table 1, taking into account lithium atoms that flow out of the system upon the calcination below, and diammonium hydrogen phosphate was weighed so that its phosphorous amount was 1.06 times the amount of phosphorus atoms in Table 1 in order to inhibit byproducts upon the calcination below from being formed. The remaining elements to be weighed (tantalum, boron, and fluorine) were weighed, assuming that they would not flow out of the system at a calcination temperature. Each of the weighed raw material powders was crushed and mixed for 2 hours using a zirconia ball mill (zirconia ball: diameter 5 mm) with the addition of a suitable amount of toluene thereby to obtain a primary mixture.

The resulting primary mixture was placed in an alumina boat, heated to 1,000°C in a rotary kiln (manufactured by MOTOYAMA CO., LTD.) under an atmosphere of air (flow rate: 100 mL/min) at a rate of temperature rise of 10°C/min., and then calcined at this temperature for 4 hours to obtain a primary calcined product.

An appropriate amount of toluene was added to the obtained primary calcined product, and the primary calcined product was crushed and mixed for 2 hours using a zirconia ball mill (zirconia ball: diameter 1 mm) thereby to obtain a secondary mixture.

Using a tablet molding machine, a pressure of 40 MPa was applied to the obtained secondary mixture by a hydraulic press thereby to form a disk-shaped molded body having a diameter of 10 mm and a thickness of 1 mm, and then a pressure of 300 MPa was applied to the disk-shaped molded body by CIP (cold isostatic press) thereby to fabricate a pellet.

The obtained pellet was placed in an alumina boat, heated to 850°C in a rotary kiln (manufactured by MOTOYAMA CO., LTD.) under an atmosphere of air (flow rate: 100 mL/min) at a rate of temperature rise of 10°C/min., and then calcined at the temperature for 96 hours to obtain a lithium ion-conductive oxide (sintered body).

The obtained lithium ion-conductive oxide (sintered body) was cooled down to room temperature, removed from the rotary kiln and transferred it under a dehumidified nitrogen gas atmosphere for storage.

[Examples 2 and 4]

Lithium ion-conductive oxides were fabricated in the same manner as in Example 1, except that mixing ratios of raw materials were changed so that the resulting lithium ion-conductive oxides satisfied the stoichiometric ratios (ratios of number of atoms) shown in Table 1.

[Examples 3, 5 and 6]

Lithium ion-conductive oxides were fabricated in the same manner as in Example 1, except that niobium pentoxide ($Nb_2O_5$) (purity 99.9% manufactured by FUJIFILM Wako Pure Chemicals Corporation) was further used and each raw material powder was used so that the resulting lithium ion-conductive oxides satisfied the stoichiometric ratios (ratios of number of atoms) in Table 1.

[Comparative Example 1]

A Lithium ion-conductive oxide was fabricated in the same manner as in Example 1, except that each raw material powder of lithium carbonate ($Li_2CO_3$) (purity 99.0% or higher, manufactured by Merck, Sigma-Aldrich Co. LLC.), tantalum pentoxide ($Ta_2O_5$) (purity 99.9% manufactured by FUJIFILM Wako Pure Chemicals Corporation), and diammonium hydrogen phosphate (($NH_4$)2$HPO_4$) (purity 98% or higher, manufactured by Merck, Sigma-Aldrich Co. LLC.), was used so that the resulting lithium ion-conductive oxide satisfied the stoichiometric ratios (ratios of number of atoms) in Table 1.

[Comparative Example 2]

A Lithium ion-conductive oxide was fabricated in the same manner as in Comparative Example 1, except that lithium fluoride (LiF) (manufactured by Merck, Sigma-Aldrich Co. LLC.) was further used and each raw material powder was used so that the resulting lithium ion-conductive oxide satisfied the stoichiometric ratios (ratios of number of atoms) in Table 1.

<X-ray diffraction (XRD)>

The obtained lithium ion-conductive oxide was crushed for 30 minutes by using an agate mortar to obtain powder for XRD measurement.

Using a powder X-ray diffraction analyzer, PANalytical MPD (manufactured by Spectris Co., Ltd.), X-ray diffraction measurement of the obtained powder for XRD measurement (Cu-K$\alpha$ ray (output: 45 kV, 40 mA), diffraction angle 2$\theta$ in a range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) was carried out to obtain an X-ray diffraction (XRD) pattern. Crystal structures included were confirmed by subjecting the obtained XRD patterns to Rietvelt analysis, using a known analysis software RIETAN-FP (creator; Fujio Izumi's website "RIETAN-FP / VENUS system distribution file" (http://fujioizumi.verse.jp/download/download.html) to calculate content rates (crystallinity) of each crystal structure. The results are shown in Table 2.

The XRD patterns of the lithium ion-conductive oxides obtained in Examples 2 and 3 and Comparative Example 1 are shown in Figure 1.

From Figure 1, only peaks derived from a monoclinic crystal structure of $LiTa_2PO_8$ were observed in Comparative Example 1. In the lithium ion-conductive oxide obtained in Example 2, peaks derived from LiTasOs (ICSD code: 493) were observed in addition to peaks derived from the $LiTa_2PO_8$ structure, and in the lithium ion-conductive oxide obtained in Example 3, peaks derived from $Ta_2O_5$ (ICSD code: 66366) were observed in addition to peaks derived from the $LiTa_2PO_8$ structure.

<Relative density>

The mass of the fabricated lithium ion-conductive oxide was measured using an electronic balance. Next, the volume was measured from an actual size of the lithium ion-conductive oxide using a micrometer. The density (measured density) of the lithium ion-conductive oxide was calculated by dividing the measured mass by the volume to calculate a relative density that is a percentage of a ratio of the measured density (%) to a theoretical density of the lithium ion-conductive oxide (measured density/theoretical density $\times$ 100). The results are shown in Table 2.

It is noted that the theoretical density of the lithium-ion conductive oxide was determined by weighted averaging, using a theoretical density of a crystal structure based on $LiTa_2PO_8$ and theoretical densities of crystal structures based on $LiTa_3O_8$, $Ta_2O_5$, and $TaPO_5$ (ICSD code: 202041), which constitute the lithium ion-conductive oxide, and the contents of each crystal structure determined by Rietveld analysis.

<Total ion conductivity>

Gold layers were formed on both sides of the obtained lithium ion-conductive oxide by using a sputtering machine to obtain a measurement pellet for ion conductivity evaluation.

The obtained measurement pellet was kept in a constant temperature bath at 25°C for 2 hours before measurement. Next, AC impedance measurement was carried out at 25°C in a frequency range of 1 Hz to 10 MHz under a condition of an amplitude of 25 mV using an impedance analyzer (manufactured by Solartron Analytical, model number: 1260A). The obtained impedance spectrum was fitted with an equivalent circuit using an equivalent circuit analysis software ZView attached with the equipment to obtain each lithium-ion conductivity within the crystal grains and at the crystal grain boundaries, and these were summed to calculate the total ion conductivity. The results are shown in Table 2.

[Table 1]

Table 1

| | Ratio of number of atoms (stoichiometric ratio) | | | | | | |
|---|---|---|---|---|---|---|---|
| | Li | Ta | Nb | B | P | O | F |
| Example 1 | 1.026 | 1.950 | 0.000 | 0.050 | 0.975 | 7.876 | 0.049 |
| Example 2 | 1.103 | 1.900 | 0.000 | 0.100 | 0.950 | 7.803 | 0.048 |
| Example 3 | 1.103 | 1.710 | 0.190 | 0.100 | 0.950 | 7.803 | 0.048 |
| Example 4 | 1.055 | 1.900 | 0.000 | 0.100 | 0.950 | 7.755 | 0.095 |
| Example 5 | 1.055 | 1.710 | 0.190 | 0.100 | 0.950 | 7.755 | 0.095 |
| Example 6 | 1.008 | 1.710 | 0.190 | 0.100 | 0.950 | 7.708 | 0.143 |
| Comparative Example 1 | 1.000 | 2.000 | 0.000 | 0.000 | 1.000 | 8.000 | 0.000 |
| Comparative Example 2 | 0.900 | 2.000 | 0.000 | 0.000 | 1.000 | 7.900 | 0.100 |
| | B/(B+P) ×100(%) | F/(O+F) ×100(%) | Nb/(Nb+Ta) ×100 (%) | Li/{(Nb+Ta)/2} (Ratio) | | | |
| Example 1 | 4.878 | 0.615 | 0.0 | 1.1 | | | |
| Example 2 | 9.524 | 0.605 | 0.0 | 1.2 | | | |
| Example 3 | 9.524 | 0.605 | 10.0 | 1.2 | | | |
| Example 4 | 9.524 | 1.210 | 0.0 | 1.1 | | | |
| Example 5 | 9.524 | 1.210 | 10.0 | 1.1 | | | |
| Example 6 | 9.524 | 1.815 | 10.0 | 1.1 | | | |
| Comparative Example 1 | 0.000 | 0.000 | 0.0 | 1.0 | | | |
| Comparative Example 2 | 0.000 | 1.250 | 0.0 | 0.9 | | | |

It is noted that the values of the ratios of the number of atoms (stoichiometric ratios) and of the contents of elements calculated by each formula in Table 1, are those of the ratios of the number of atoms (stoichiometric ratios) and of the contents of elements calculated by each formula in the lithium ion-conductive oxides obtained in each Example and Comparative Example.

[Table 2]

| | LTPO structure crystallinity (%) | LiTa₃O₈ crystallinity (%) | Ta₂O₅ crystallinity (%) | TaPO₅ crystallinity (%) | Theoretical density (g/cm³) | Relative density (%) | Total ion conductivity (mS/cm) |
|---|---|---|---|---|---|---|---|
| Example 1 | 93.5 | 6.5 | 0.0 | 0.0 | 6.00 | 90.8 | 0.794 |
| Example 2 | 89.6 | 10.4 | 0.0 | 0.0 | 6.10 | 95.2 | 0.857 |
| Example 3 | 99.0 | 0.0 | 1.0 | 0.0 | 5.87 | 98.6 | 0.660 |
| Example 4 | 96.3 | 3.2 | 0.0 | 0.5 | 5.92 | 96.6 | 0.843 |
| Example 5 | 96.8 | 0.0 | 2.2 | 1.0 | 5.89 | 97.8 | 0.662 |
| Example 6 | 95.3 | 0.0 | 1.8 | 2.9 | 5.86 | 97.5 | 0.565 |
| Comparative Example 1 | 100.0 | 0.0 | 0.0 | 0.0 | 5.85 | 56.2 | 0.173 |
| Comparative Example 2 | 95.0 | 1.2 | 0.0 | 3.8 | 5.84 | 60.3 | 0.114 |

Table 2 shows that the present oxide has high total ion conductivity and that the lithium ion-conductive oxides with a high relative density can be easily obtained.

**Claims**

1. A lithium ion-conductive oxide, comprising a crystal structure based on $LiTa_2PO_8$, and

   comprising at least lithium, tantalum, boron, phosphorus, oxygen, and fluorine as constituent elements, wherein a boron content represented by the following formula (1) is 4.0 to 15.0%, and a fluorine content represented by the following formula (2) is 0.5 to 2.0%:

$$\text{The number of B atoms}/(\text{the number of B atoms} + \text{the number of P atoms}) \times 100 \ ...(1)$$

$$\text{The number of F atoms}/(\text{the number of O atoms} + \text{the number of F atoms}) \times 100 \ ...(2)$$

2. The lithium ion-conductive oxide according to claim 1, further comprising niobium as a constituent element, wherein a niobium content represented by the following formula (3) is more than 0% and 20.0% or less:

$$\text{The number of Nb atoms}/(\text{the number of Nb atoms} + \text{the number of Ta atoms}) \times 100 \ ...(3)$$

3. The lithium ion-conductive oxide according to claim 1 or 2, having a relative density of 70% or more that is a percentage of a ratio of a measured density calculated from a mass and volume of a lithium ion-conductive oxide to a theoretical density of the oxide.

4. The lithium ion-conductive oxide according to any one of claims 1 to 3, wherein a content rate of the crystal structure based on $LiTa_2PO_8$ is 85% or more.

5. The lithium ion-conductive oxide according to any one of claims 1 to 4, wherein a lithium content represented by the following formula (4) is more than 0.9 and 1.5 or less:

$$\text{The number of Li atoms}/\{(\text{the number of Nb atoms} + \text{the number of Ta atoms})/2\} \ ...(4)$$

6. An all-solid-state battery, comprising:

   a positive electrode comprising a positive electrode active material;
   a negative electrode comprising a negative electrode active material; and
   a solid electrolyte layer between the positive electrode and the negative electrode, wherein
   the solid electrolyte layer comprises the lithium ion-conductive oxide according to any one of claims 1 to 5.

7. The all-solid-state battery according to claim 6, wherein the positive electrode active material comprises one or more compounds selected from the group consisting of $LiM3PO_4$ wherein M3 is one or more elements selected from the group consisting of Mn, Co, Ni, Fe, Al, Ti and V, or two elements of V and O, $LiM5VO_4$ wherein M5 is one or more elements selected from the group consisting of Fe, Mn, Co, Ni, Al and Ti, $Li_2M6P_2O_7$ wherein M6 is one or more elements selected from the group consisting of Fe, Mn, Co, Ni, Al, Ti and V, or two elements of V and O, $LiVP_2O_7$, $Li_{x7}V_{y7}M7_{z7}$ wherein $2 \leq x7 \leq 4$, $1 \leq y7 \leq 3$, $0 \leq z7 \leq 1$, $1 \leq y7+z7 \leq 3$, and M7 is one or more elements selected from the group consisting of Ti, Ge, Al, Ga and Zr, $Li_{1+x8}Al_{x8}M8_{2-x8}(PO_4)_3$ wherein $0 \leq x8 \leq 0.8$, and M8 is one or more elements selected from the group consisting of Ti and Ge, $LiNi_{1/3}Co_{1/3}Mn_{1/3}O_2$, $LiCoO_2$, $LiNiO_2$, $LiMn_2O_4$, $Li_2CoP_2O_7$, $Li_3V_2(PO_4)_3$, $Li_3Fe_2(PO_4)_3$, $LiNi_{0.5}Mn_{1.5}O_4$ and $Li_4Ti_5O_{12}$.

8. The all-solid-state battery according to claim 6 or 7, wherein the negative electrode active material comprises one or more compounds selected from the group consisting of $LiM3PO_4$ wherein M3 is one or more elements selected from the group consisting of Mn, Co, Ni, Fe, Al, Ti and V, or two elements of V and O, $LiM5VO_4$ wherein M5 is one or more elements selected from the group consisting of Fe, Mn, Co, Ni, Al and Ti, $Li_2M6P_2O_7$ wherein M6 is one or more elements selected from the group consisting of Fe, Mn, Co, Ni, Al, Ti and V, or two elements of V and O, $LiVP_2O_7$, $Li_{x7}V_{y7}M7_{z7}$ wherein $2 \leq x7 \leq 4$, $1 \leq y7 \leq 3$, $0 \leq z7 \leq 1$, $1 \leq y7+z7 \leq 3$, and M7 is one or more elements selected from the group consisting of Ti, Ge, Al, Ga and Zr, $Li_{1+x8}Al_{x8}M8_{2-x8}(PO_4)_3$ wherein $0 \leq x8 \leq 0.8$, and M8 is one or more elements selected from the group consisting of Ti and Ge, $(Li_{3-a9x9+(5-b9)y9}M9_{x9})(V_{1-y9}M10_{y9})O_4$ wherein M9 is one or more elements selected from the group consisting of Mg, Al, Ga and Zn, M10 is one or more elements selected from the group consisting of Zn, Al, Ga, Si, Ge, P and Ti, $0 \leq x9 \leq 1.0$, $0 \leq y9 \leq 0.6$, a9 is an average valence of M9, and b9 is an average valence of M10, $LiNb_2O_7$, $Li_4Ti_5O_{12}$, $Li_4Ti_5PO_{12}$, $TiO_2$, LiSi, and graphite.

9. The all-solid-state battery according to any one of claims 6 to 8, wherein the positive electrode and the negative electrode comprise the lithium ion-conductive oxide according to any one of claims 1 to 5.

Figure 1

## INTERNATIONAL SEARCH REPORT

| International application No. |
| --- |
| **PCT/JP2022/012228** |

**A.    CLASSIFICATION OF SUBJECT MATTER**

*C01B 25/37*(2006.01)i; *H01M 4/58*(2010.01)i; *H01B 1/08*(2006.01)i; *C04B 35/495*(2006.01)i; *H01M 10/0562*(2010.01)i
FI:    C04B35/495; H01M4/58; H01M10/0562; H01B1/08; C01B25/37 M

According to International Patent Classification (IPC) or to both national classification and IPC

**B.    FIELDS SEARCHED**

Minimum documentation searched (classification system followed by classification symbols)

C01B25/37; H01M4/58; H01M10/0562; H01B1/08; C04B35/495

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JSTChina/JST7580 (JDreamIII); CAplus/REGISTRY (STN)

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111403805 A (SHENZHEN INSTITUTES OF ADVANCED TECHNOLOGY) 10 July 2020 (2020-07-10)<br>    paragraphs [0004]-[0009] | 1-9 |
| A | WO 2021/039834 A1 (SHOWA DENKO KK) 04 March 2021 (2021-03-04)<br>    entire text | 1-9 |
| A | WO 2020/036290 A1 (AJOU UNIVERSITY INDUSTRY-ACADEMIC COOPERATION FOUNDATION) 20 February 2020 (2020-02-20)<br>    entire text | 1-9 |
| A | KIM, J. et al. LiTa2PO8: a fast lithium-ion conductor with new framework structure. Journal of Materials Chemistry A. 29 October 2018, vol. 6, no. 45, pp. 22478-22482, ISSN:2050-7488, DOI:10.1039/c8ta09170f<br>    entire text | 1-9 |
| A | HUSSAIN, Fiaz et al. Theoretical Insights into Li-Ion Transport in LiTa2PO8. Journal of Physical Chemistry C. 23 July 2019, vol. 123, no. 32, pp. 19282-19287, ISSN:1932-7447, DOI:10.1021/acs.jpcc.9b03313<br>    entire text | 1-9 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 April 2022** | **26 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/012228**

### C. DOCUMENTS CONSIDERED TO BE RELEVANT

| Category* | Citation of document, with indication, where appropriate, of the relevant passages | Relevant to claim No. |
|---|---|---|
| A | ISHIGAKI, Norikazu et al. Structural and Li-ion diffusion properties of lithium tantalum phosphate LiTa2PO8. Solid State Ionics. 12 May 2020, vol. 351, ISSN:0167-2738, DOI:10.1016/j.ssi.2020.115314<br>entire text | 1-9 |

Form PCT/ISA/210 (second sheet) (January 2015)

**INTERNATIONAL SEARCH REPORT**
Information on patent family members

International application No.

**PCT/JP2022/012228**

| Patent document cited in search report | | | Publication date (day/month/year) | Patent family member(s) | | | Publication date (day/month/year) |
|---|---|---|---|---|---|---|---|
| CN | 111403805 | A | 10 July 2020 | (Family: none) | | | |
| WO | 2021/039834 | A1 | 04 March 2021 | JP | 2021-38099 | A | |
| WO | 2020/036290 | A1 | 20 February 2020 | EP | 3840100 | A1 | |
| | | | | entire text | | | |
| | | | | KR | 10-2020-0020172 | A | |
| | | | | CN | 112805861 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013157090 A
- WO 2020036290 A
- JP 2020194773 A